# EUROPÄISCHE PATENTSCHRIFT

(11) **EP 1 647 846 B1**
(45) Veröffentlichungstag und Bekanntmachung des Hinweises auf die Patenterteilung: **02.11.2011**
(21) Anmeldenummer: 05019738.3
(22) Anmeldetag: 10.09.2005
(51) Int. Cl.: G02B 5/22, G02B 5/28, G02B 5/04, G02B 5/20

(54) **Optisches Beobachtungsgerät mit einer Vorrichtung zum Schutz gegen einfallende Störstrahlung**
Optical viewing device with protection from disturbing radiation
Appareillage de visualisation optique avec protection de rayonnement parasite

(30) Priorität: 14.10.2004 DE 102004050165
(43) Veröffentlichungstag der Anmeldung: 19.04.2006
(73) Patentinhaber: Carl Zeiss Sports Optics GmbH, 35576 Wetzlar (DE)
(72) Erfinder: Claudi, Volker, 35633 Lahnau (DE); Heller, Matthias, 35644 Hohenahr (DE)
(74) Vertreter: Witte, Weller & Partner

(56) Entgegenhaltungen:
- EP-A- 0 855 607
- DE-A1- 10 151 701
- FR-A- 2 844 602
- US-A- 4 909 609
- US-A- 4 934 246
- US-A- 5 541 762
- US-A- 5 867 329
- US-A- 6 075 661
- TSUDA H ET AL: "Polarisation independent tunable liquid-crystal Fabry-Perot interferometer filter module with double-pass configuration" ELECTRONICS LETTERS, IEE STEVENAGE, GB, Bd. 31, Nr. 10, 11. Mai 1995 (1995-05-11), Seiten 828-829, XP006002799 ISSN: 0013-5194

## Beschreibung

Die Erfindung betrifft ein Fernglas mit einer im Strahlengang angeordneten Vorrichtung zum Schutz gegen einfallende Störstrahlung, die ein auf die Störstrahlung abgestimmtes Filter enthält

Ein Fernglas der vorstehend genannten Art ist aus dem Dokument US 4 909 609 A bekannt.

Ferngläser werden unter vielerlei Bedingungen eingesetzt, in denen die Gefahr besteht, dass außer dem eigentlichen Beobachtungslicht auch eine Störstrahlung hoher Intensität in das Fernglas eintritt. Diese Störstrahlung kann die Augen des Benutzers des Fernglases oder einen Beobachtungssensor gefährden bzw. schädigen.

Im militärischen Bereich ist es beispielsweise bekannt, Ferngläser, Periskope, Nachtsichtgeräte, Videokameras und dergleichen, mit einer Vorrichtung zu versehen, um den Beobachter gegen Störstrahlung zu schützen. Dies gilt in erster Linie für Laserstrahlung hoher Intensität, wie sie in Gefechtssituationen von feindlichen Laserwaffen, aber auch von Entfernungsmessern oder Zielvorrichtungen, ausgesandt Wird. Die dabei eingesetzten Laser sind üblicherweise Nd-YAG-Festkörperlaser, deren Wellenlänge bei 1,0 µm liegt, also oberhalb des sichtbaren Bereiches von ca. 400 - 800 nm.

Das eingangs genannte Dokument US 4 909 609 A beschreibt eine Schutzvorrichtung für Ferngläser und dergleichen gegen das Laserlicht feindlicher Waffen. Die Schutzvorrichtung enthält zwei Filter, von denen das erste ein Bandpassfilter ist, das für den jeweiligen Sensor ausgelegt ist. Im Falle eines menschlichen Auges ist das erste Filter auf den Bereich sichtbaren Lichts ausgelegt. Das zweite Filter ist in diesem Anwendungsfall speziell für die Absorption von ultraviolettem Licht ausgelegt und lässt ebenfalls sichtbares Licht durch.

Aus dem Dokument US 6 075 661 A ist im selben Zusammenhang ein Adapter bekannt, der vor die Linse eines optischen Gerätes, beispielsweise eines brillenartigen Nachtsichtgerätes, gesetzt werden kann. Der Adapter enthält ein Interferenzfilter, das auf die Wellenlänge von Laserlicht abgestimmt ist.

In dem Dokument US 4 934 246 ist ein Periskop für ein Panzerfahrzeug beschrieben. Das Periskop ist mit einem Fenster versehen, das aus getempertem Glas besteht und als Laser-Filter wirkt.

Weitere bekannte Vorrichtungen arbeiten mit mechanischen oder elektrooptischen Blenden oder Verschlüssen.

Bei einem Fernglas für militärische Anwendungen, ist es ferner bekannt, auf einer im Strahlengang befindlichen Linse eine Laserschutzbeschichtung anzubringen. Die Filterschicht wirkt in diesem Falle als Interferenzfilter mit spektral selektivem Transmissionsverhalten. Die Störstrahlung durchsetzt dieses Interferenzfilter ein Mal.

Der Nachteil dieser bekannten Anordnung liegt darin, dass Filterschichten nicht mit über die Fläche ideal homogener Transmissionsverteilung herstellbar sind. Andererseits soll die Transmission der Störstrahlung für eine ausreichende Schutzwirkung in der Größenordnung von 10⁻⁵ liegen. Dies ist aber nur dann erreichbar, wenn die Summe der unvermeidbaren Fehlstellen in einer real herstellbaren Filterschicht entsprechend klein ist. Bei einem Nutzdurchmesser von 10 mm darf der Flächenanteil der Fehlstellen dann nicht größer als 0,003 mm² sein. Ein derartig geringer Flächenanteil ist aber, wenn überhaupt, nur erreichbar, wenn bei der Herstellung der Filterschicht mit extremen Sauberkeitsanforderungen bzw. mit extremer Ausschussquote gearbeitet wird.

Interferenzfilter haben darüber hinaus den Nachteil, dass es infolge der sehr exakt parallelen Ein- und Austrittsflächen, auf die die Störstrahlung unter einem rechten Winkel auftrifft, zu Vielfachreflexionen zwischen diesen Flächen kommt. Es lässt sich zeigen, dass die optische Dichte und damit die Schutzwirkung des Filters mit der Anzahl der Vielfachreflexionen abnehmen.

Aus dem Dokument US 5 867 329 A ist ein Bandpassfilter für Analysegeräte bekannt, das aus einer Anordnung von drei konkaven Spiegelkörpern besteht, wobei einer der Spiegelkörper auf einer Seite angeordnet und größer als die beiden anderen Spiegelkörper ausgebildet ist, während die beiden anderen Spiegelkörper nebeneinander angeordnet sind und dem größeren Spiegelkörper gegenüber stehen. Die drei Spiegelkörper bestehen aus einem für eine Störstrahlung absorbierenden Werkstoff. Sie sind jeweils mit einer für die Störstrahlung durchlässigen und für eine Nutzstrahlung reflektierenden dielektrischen Beschichtung versehen. Das Licht wird auf einen der kleineren Spiegel eingestrahlt und von dort auf den größeren Spiegel umgelenkt, von dem es dann auf den anderen kleinen Spiegel reflektiert wird und von dort austritt. Der Störstrahlungsanteil des Lichtes wird bei jedem Auftreffen auf eine Beschichtung überwiegend durchgelassen und im Spiegelkörper absorbiert, während der Nutzstrahlungsanteil jeweils überwiegend reflektiert wird.

Das Dokument EP 0 855 607 A2 beschreibt ein Filter mit einstellbarer Wellenlänge für ein optisches Multiplex-Kommunikationssystem. Ein einfallender Lichtstrahl wird über eine erste optische Faser auf eine optische Filterplatte geleitet, durchsetzt diese senkrecht und gelangt in ein Prisma, in dem er zwei Mal um 90° umgelenkt wird, so dass er aus dem Prisma in umgekehrter Richtung austritt. Er durchsetzt dann die Filterplatte ein zweites Mal und wird von einer zweiten optischen Faser, die parallel zur ersten optischen Faser verläuft, aufgenommen und weggeleitet. Die Filterplatte rotiert um eine Achse, die sich senkrecht zu den optischen Fasern erstreckt, um das Durchlassband des Filters einzustellen.

In dem Dokument FR 2 844 602 A1 ist ein weiteres optisches Filter für ein optisches Kommunikationssystem beschrieben. Ein Lichtstrahl fällt dabei unter einem bestimmten Winkel auf eine Platte eines Fabry-Perot-Resonators und tritt unter dem selben Winkel an einer zur ersten Platte parallelen und von dieser beabstandeten zweiten Platte aus. Der austretende Strahl wird über eine Rüekführeinrichtung an den Punkt zurückgeleitet, an dem der ankommende Lichtstrahl in die erste Platte eintritt. Er wird dort unter einem zweiten Winkel eingestrahlt und tritt daher an der zweiten Platte an der selben Stelle aus, an der der Lichtstrahl beim ersten Durchgang austrat, jedoch unter dem zweiten Winkel.

Das Dokument DE 101 51 701 A1 beschreibt ein Vermessungsinstrument, bei dem ein Porro-Prisma im Strahlengang verwendet wird.

Der Erfindung liegt daher die Aufgabe zugrunde, ein Fernglas der eingangs genannten Art dahingehend weiterzubilden, dass die vorstehend genannten Nachteile vermieden werden. Insbesondere soll ein Fernglas zur Verfügung gestellt werden, das eine hohe Schutzwirkung gegen Störstrahlung bei vertretbarem Herstellaufwand des Störstrahlungs-Filters ermöglicht.

Bei einem Fernglas der eingangs genannten Art wird diese Aufgabe erfindungsgemäß dadurch gelöst, dass die Vorrichtung ein Prisma aufweist, dass das Prisma auf einer ersten Oberfläche mit einer die Störstrahlung selektiv absorbierenden oder selektiv reflektierenden Filterschicht versehen ist, und dass die Störstrahlung durch die erste Oberfläche in das Prisma eintritt, wobei sie die Filterschicht ein erstes Mal durchläuft, in dem Prisma an einer zweiten Oberfläche und an einer dritten Oberfläche reflektiert wird und dann durch die erste Oberfläche wieder aus dem Prisma austritt, wobei sie die Filterschicht ein zweites Mal durchläuft, und wobei die Störstrahlung auf ihrem Wege zwischen dem ersten und dem zweiten Durchlaufen der Filterschicht im Wesentlichen nicht in sich reflektiert wird.

Die der Erfindung zugrunde liegende Aufgabe wird auf diese Weise vollkommen gelöst.

Durch den Kunstgriff, die Störstrahlung zwei mal durch die Filterschicht laufen zu lassen, wird nämlich eine deutliche Reduzierung der Anforderungen an die Sauberkeit beim Herstellprozess der Filterschicht erreicht, weil der maximal zulässige Flächenanteil der Fehlstellen sich weit überproportional erhöht. Für das oben genannte Beispiel mit einer Schutzwirkung von 10⁻⁵ und einem Nutzdurchmesser von 10 mm erhöht sich bei Ausführungsformen der Erfindung der zulässige Flächenanteil der Fehlstellen von den für den Fall eines Interferenzfilters oben genannten 0,003 mm² auf 0,4 mm², also um mehr als das 130-fache.

Die Maßnahme, wonach die Störstrahlung auf ihrem Wege zwischen dem ersten und dem zweiten Durchlaufen der Filterschicht im Wesentlichen nicht in sich reflektiert wird, hat den Vorteil, dass die oben bereits erwähnte weit überproportionale Erhöhung des zulässigen Flächenanteils an Fehlstellen erreicht werden kann, weil die optische Dichte mit der Zahl der Vielfachreflexionen abnimmt.

Ferner wird eine gute Wirkung dann erzielt, wenn die Störstrahlung auf ihrem Weg zwischen dem ersten und dem zweiten Durchlaufen des Filters durch einen Werkstoff geleitet wird, der für die Störstrahlung optisch selektiv absorbierend ist. Beispielsweise wird bei einer Störstrahlung eines Nd-YAG-Lasers der Werkstoff aus der Gruppe LLF3, LLF4, GFK68, Sk12 ausgewählt.

Diese Maßnahme hat den Vorteil, dass Vielfachreflexionen zwischen den Durchgängen weiter vermindert bzw. abgeschwächt werden.

Bei einem besonders bevorzugten Ausführungsbeispiel der Erfindung ist das Filter im Bereich einer Grenzfläche zwischen zwei Einzelprismen einer Prismen-Anordnung angeordnet.

Diese Maßnahme hat den Vorteil, dass der gewünschte zweimalige Durchtritt der Störstrahlung mit einfachen und kompakten optischen Mitteln erreichbar ist.

Besonders bevorzugt ist dabei, wenn die Prismenanordnung ein Porro-Prisma ist.

Diese Maßnahme hat den Vorteil, dass der Aufbau besonders raumsparend ist.

Obwohl im Rahmen der vorliegenden Erfindung alle Arten von Störstrahlung angesprochen sind, ist bei einer bevorzugten Anwendung das Filter auf die Störstrahlung eines Lasers abgestimmt, insbesondere auf die Störstrahlung eines Nd-YAG-Lasers (Schwerpunkt: militärische Anwendungen) oder auf die Störstrahlung eines Excimer-Lasers (Schwerpunkt: zivile Anwendungen).

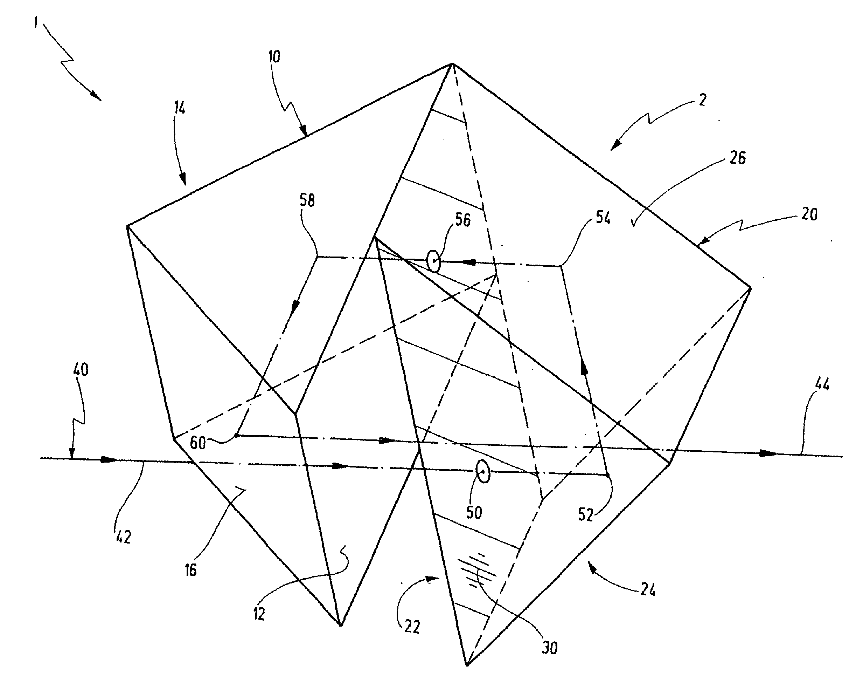

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert.

Die einzige Figur zeigt in perspektivischer und schematischer Ansicht ein Porro-Prismensystem, wie es im Rahmen der vorliegenden Erfindung verwendet werden kann.

In der Figur bezeichnet 1 eine Vorrichtung in einem Fernglas, die zum Schutz gegen einfallende Störstrahlung vorgesehen ist. Die Vorrichtung 1 dient dabei zum Schutze der Augen des Beobachters. Wenn das Fernglas zum Beobachten einen Sensor verwendet, so wird durch die Vorrichtung 1 der Sensor geschützt.

Die Vorrichtung 1 enthält ein Porro-Prisma 2. Das Porro-Prisma 2 besteht in an sich bekannter Weise aus zwei Einzelprismen. Ein erstes Einzelprisma 10 hat eine Hypotenusenfläche 12, sowie eine erste Kathetenfläche 14 und eine zweite Kathetenfläche 16. Ein zweites Einzelprisma 20 hat eine Hypotenusenfläche 22, sowie eine erste Kathetenfläche 24 und eine zweite Kathetenfläche 26. Die Einzelprismen 10 und 20 liegen mit jeweils einer Hälfte ihrer Hypotenusenflächen 12 und 22 aneinander.

Auf die Hypotenusenfläche 22 des zweiten Einzelprismas 20 ist eine Filterschicht 30 aufgebracht. Die Filterschicht 30 hat je nach Anwendung vorzugsweise eine Hochpass- oder eine Tiefpasscharakteristik. Wenn mit der Vorrichtung 1 ein Schutz gegen Laserlicht bewirkt werden soll, dessen Wellenlänge unterhalb derjenigen des sichtbaren Lichtes liegt (Excimer-Laser für zivile, medizinische und industrielle Anwendungen), so wird eine Hochpasscharakteristik gewählt. Wenn hingegen mit der Vorrichtung 1 ein Schutz gegen Laserlicht bewirkt werden soll, dessen Wellenlänge oberhalb derjenigen des sichtbaren Lichtes liegt (ND-YAG-Laser für militärische Anwendungen), so wird eine Tiefpasscharakteristik gewählt. Alternativ kann auch für den jeweiligen Bereich der Wellenlänge eine schmalbandige Sperrcharakteristik gewählt werden.

Mit 40 ist in der Figur die Störstrahlung, im Beispielsfall also die Laserstrahlung angedeutet. Die Störstrahlung 40 tritt bei 42 in die Vorrichtung 1 ein und bei 44 wieder aus.

Das Porro-Prisma 2 ist so in der Vorrichtung 1 positioniert, dass die Störstrahlung 40 ab ihrem Eintritt 42 unterhalb des ersten Einzelprismas 10 durch läuft und dann in einem ersten Durchgang 50 durch die Hypotenusenfläche 22 des zweiten Einzelprismas 20 hindurch und in dieses eintritt. Die Störstrahlung wird dann in einem ersten Reflexionspunkt 52 an der ersten Kathetenfläche 24 des zweiten Einzelprismas 20 reflektiert, dann ein weiteres mal in einem zweiten Reflexionspunkt 54 an der zweiten Kathetenfläche 26 des zweiten Einzelprismas 20 und tritt dann durch einen zweiten Durchgang 56 in der Hypotenusenfläche 22 in das erste Einzelprisma 10 über. Dort wird sie in einem dritten Reflexionspunkt 58 an der ersten Kathetenfläche 14 des ersten Einzelprismas 10 sowie danach in einem vierten Reflexionspunkt 60 an der zweiten Kathetenfläche 16 des ersten Einzelprismas 10 reflektiert und tritt dann durch die Hypotenusenfläche 12 des ersten Einzelprismas 10 und seitlich an dem zweiten Einzelprisma 20 vorbei aus dem Porro-Prisma 2 wieder aus.

Die Störstrahlung 40 hat damit die Hypotenusenfläche 22 des zweiten Einzelprismas 20 und damit die Filterschicht 30 zwei Mal durchsetzt, nämlich an den Durchgängen 50 und 56.

Die weiter oben erläuterte Erhöhung des zulässigen Flächenanteils von Fehlstellen tritt umso mehr ein, je weniger Reflexionen zwischen den Durchtrittspunkten 50 und 56 stattfinden. Bei einem Interferenzfilter mit sehr genau parallelen Grenzflächen treten erhebliche innere Reflexionen auf. Es lässt sich zeigen, dass dies zu einer Verminderung der optischen Dichte und damit zu einer Verminderung der Schutzwirkung führt.

Bei einem realen Porro-Prisma 2 hingegen sind die reflektierenden Oberflächen 24-26-14-16 nicht ideal konjugiert, weil deren Winkellage fehlerbehaftet ist. Deswegen werden Vielfachreflexionen nicht in sich selbst abgebildet sondern brechen nach einer verhältnismäßig geringen Zahl von Reflexionen ab.

Die Schutzwirkung der Vorrichtung 1 lässt sich weiter dadurch verbessern, wenn die Strecke zwischen den beiden Durchgängen 50 und 56 aus einem Werkstoff ausgebildet ist, der für die Störstrahlung 40 optisch selektiv absorbierend ist. Wenn auf die Laserstrahlung eines Yd-YAG-Lasers abgestellt wird, so kann als Werkstoff LLF3, LLF4, GFK68 oder SK12 verwendet werden.

## Patentansprüche

1. Fernglas mit einer im Strahlengang angeordneten Vorrichtung (1) zum Schutz gegen einfallende Störstrahlung (40), die ein auf die Störstrahlung (40) abgestimmtes Filter enthält, **dadurch gekennzeichnet, dass** die Vorrichtung (1) ein Prisma (20) aufweist, dass das Prisma (20) auf einer ersten Oberfläche (22) mit einer die Störstrahlung (40) selektiv absorbierenden oder selektiv reflektierenden Filterschicht (30) mit Hochpass-, Tiefpass- oder schmalbandiger Sperrcharakteristik versehen ist, und dass die Störstrahlung (40) durch die erste Oberfläche (22) in das Prisma (20) eintritt, wobei sie die Filterschicht ein erstes Mal (50) durchläuft, in dem Prisma (20) an einer zweiten Oberfläche (24) und an einer dritten Oberfläche (26) reflektiert wird und dann durch die erste Oberfläche (22) wieder aus dem Prisma (20) austritt, wobei sie die Filterschicht (30) ein zweites Mal (56) durchläuft und wobei die Störstrahlung (40) auf ihrem Wege zwischen dem ersten (50) und dem zweiten (56) Durchlaufen der Filterschicht (30) im Wesentlichen nicht in sich reflektiert wird.

2. Fernglas nach Anspruch 1, **dadurch gekennzeichnet, dass** die Störstrahlung (40) auf ihrem Weg zwischen dem ersten (50) und dem zweiten (56) Durchlaufen des Filters durch einen Werkstoff geleitet wird, der für die Störstrahlung (40) optisch selektiv absorbierend ist.

3. Fernglas nach Anspruch 2, **dadurch gekennzeichnet, dass** bei einer Störstrahlung eines Nd-YAG-Lasers der Werkstoff aus der Gruppe LLF3, LLF4, GFK68, Sk12 ausgewählt wird.

4. Fernglas nach einem oder mehreren der Ansprüche 1 bis 3, **dadurch gekennzeichnet, dass** das Filter (22/30) im Bereich einer Grenzfläche (22) zwischen zwei Einzelprismen (10, 20) einer Prismen-Anordnung angeordnet ist.

5. Fernglas nach Anspruch 4, **dadurch gekennzeichnet, dass** die Prismenanordnung ein Porro-Prisma (2) ist.

## Claims

1. A telescope with a device (1) arranged within the beam path for protecting against incoming flare (40) which has a filter tuned to the flare (40), **characterized in that** the device (1) has a prism (20), that the prism (20), on a first surface (22), is provided with a filter layer (30) with high pass, low pass or narrow band stop characteristic which selectively absorbs or selectively reflects the flare (40), and that the flare (40) enters into the prism (20) through the first surface (22), wherein the flare transits the filter layer a first time, is reflected in the prism (20) at a second surface (24) and at a third surface (26) and, then, emerges through the first surface (22) from the prism (20) again, whereby the flare (40) transits the filter layer (30) a second time (56), and wherein the flare (40) is substantially not reflected in itself on its way between the first (50) and the second (56) transit through the filter layer (30).

2. The telescope of claim 1, **characterized in that** the flare (40) on its way between the first (50) and the second (56) transit through the filter is guided through a material being optically selectively absorbing for the flare (40).

3. The telescope of claim 2, **characterized in that**, for a flare of a Nd-YAG-laser, the material is selected from the group: LLF3, LLF4, GFK68, Sk12.

4. The telescope of one or more of claims 1 through 3, **characterized in that** the filter (22/30) is arranged in the area of a boundary surface (22) between two individual prisms (10, 20) of a prism assembly.

5. The telescope of claim 4, **characterized in that** the prism assembly is a Porro prism.

## Revendications

1. Jumelles comprenant un dispositif (1) disposé dans la trajectoire du faisceau pour la protection contre le rayonnement parasite (40) incident, qui contient un filtre adapté au rayonnement parasite (40), **caractérisées en ce que** le dispositif (1) présente un prisme (20), **en ce que** le prisme (20) est doté sur une première surface (22) d'une couche filtrante (30) absorbant de façon sélective ou réfléchissant de façon sélective le rayonnement parasite (40) avec une caractéristique de filtre passe-haut, caractéristique de filtre passe-bas ou caractéristique de blocage à bande étroite, et **en ce que** le rayonnement parasite (40) entre par la première surface (22) dans le prisme (20), il traverse la couche filtrante une première fois (50), est réfléchi dans le prisme (20) sur une seconde surface (24) et sur une troisième surface (26) et sort ensuite par la première surface (22) à nouveau du prisme (20), il traverse la couche filtrante (30) une seconde fois (56) et le rayonnement parasite (40) n'est pas réfléchi pour l'essentiel sur lui-même sur son trajet entre la première traversée (50) et la seconde traversée (56) de la couche filtrante (30).

2. Jumelles selon la revendication 1, **caractérisées en ce que** le rayonnement parasite (40) est guidé sur son trajet entre la première traversée (50) et la seconde traversée (56) du filtre à travers un matériau qui est absorbant avec une sélectivité optique pour le rayonnement parasite (40).

3. Jumelles selon la revendication 2, **caractérisées en ce que** , dans le cas d'un rayonnement parasite d'un laser Nd-YAG, le matériau est choisi dans le groupe constitué par LLF3, LLF4, GFK68, Sk12.

4. Jumelles selon l'une quelconque ou plusieurs des revendications 1 à 3, **caractérisées en ce que** le filtre (22/30) est disposé dans la zone d'une surface limite (22) entre deux prismes individuels (10, 20) d'un agencement de prismes.

5. Jumelles selon la revendication 4, **caractérisées en ce que** l'agencement de prismes est un prisme de Porro (2).
